# EUROPEAN PATENT APPLICATION

(11) **EP 4 346 059 A1**
(43) Date of publication of application: **03.04.2024**
(21) Application number: 23195444.7
(22) Date of filing: 05.09.2023
(51) Int. Cl.: H02J 7/00

(54) **CONTROL DEVICE**

(30) Priority: 21.09.2022 JP 2022149945
(71) Applicant: Yanmar Holdings Co., Ltd., Osaka-shi, Osaka (JP)
(72) Inventor: YASAKA, Masafumi, Osaka (JP); KANEDA, Kensuke, Osaka (JP); ONITSUKA, Kosuke, Fukuoka (JP); YOSHITOMI, Daisuke, Osaka (JP)
(74) Representative: Novagraaf International SA

(57) **Abstract**

To provide a control device that prevents an operator from being confused by execution of balance processing. A control device includes a power storage unit, a balance processing unit, and a control unit. The power storage unit includes a plurality of battery cells, and supplies power to a load. In a case where the load stops, the balance processing unit can execute balance processing of reducing variation in the voltage of each of the plurality of battery cells according to the degree of the variation in the voltage. The control unit generates, for display, a state image indicating the state of the variation according to the degree of the variation.

## Description

### TECHNICAL FIELD

The present invention relates to a control device.

### BACKGROUND ART

A working machine according to the background art is driven by power supplied from a battery pack under the control of a control device. The battery pack includes a plurality of battery modules. In each battery module, a plurality of battery cells is connected in series. The working machine further includes a lead battery.
The lead battery is a battery having a lower voltage than that of the battery pack. In addition, the lead battery supplies drive power to the control device. After a key switch of the working machine has switched from ON to OFF, the control device executes balance processing in a time range in which the voltage of the lead battery different from the battery pack reaches a predetermined voltage value or more and the charging rate of the battery pack reaches a predetermined charging rate value or more. The balance processing reduces variation in energy capacity for each battery cell (see, e.g., Patent Document 1).

### PRIOR ART DOCUMENT

### PATENT DOCUMENT

Patent Document 1: JP-A-2019-161888

### SUMMARY OF INVENTION

### TECHNICAL PROBLEM

However, in the background art, there is a problem that an operator of the working machine cannot recognize that the balance processing is executed after the stop of a load. Thus, the operator is confused because the balance processing is executed in the working machine although the working machine is stopped by operation of the key switch.

The present invention has been made in view of the above-described problem, and an object thereof is to provide a control device allowing an operator to recognize that balance processing is executed after the stop of a load.

### SOLUTION TO PROBLEM

The control device according to the present invention includes a power storage unit, a balance processing unit, and a control unit. The power storage unit includes a plurality of battery cells, and supplies power to a load. In a case where the load stops, the balance processing unit can execute balance processing of reducing variation in the voltage of each of the plurality of battery cells according to the degree of voltage variation. The control unit generates, for display, a state image indicating the state of the variation according to the degree of variation.

### ADVANTAGEOUS EFFECTS OF INVENTION

According to the present invention, it is possible to provide the control device allowing the operator to recognize that the balance processing is executed after the stop of the load.

### BRIEF DESCRIPTION OF DRAWINGS

Fig. 1 is a block diagram of a working machine including a control device according to an embodiment;
Fig. 2 is a block diagram illustrating a configuration example of a battery pack illustrated in Fig. 1;
Fig. 3 is a graph illustrating a relationship between a characteristic value and variation;
Fig. 4 is a flowchart illustrating the processing of the control device 100 illustrated in Fig. 1;
Fig. 5 is a view illustrating a state image 91 generated in Step S104 illustrated in Fig. 4;
Fig. 6 is a view illustrating a state image 92 generated in Step S105 illustrated in Fig. 4; and
Fig. 7 is a view illustrating a display screen example of a display 9 illustrated in Fig. 1.

### DESCRIPTION OF EMBODIMENTS

Hereinafter, embodiments and various modifications of the present invention will be described with reference to the drawings. Note that in the drawings, the same or corresponding elements are denoted by the same reference signs and description thereof will not be repeated.

### [Embodiment]

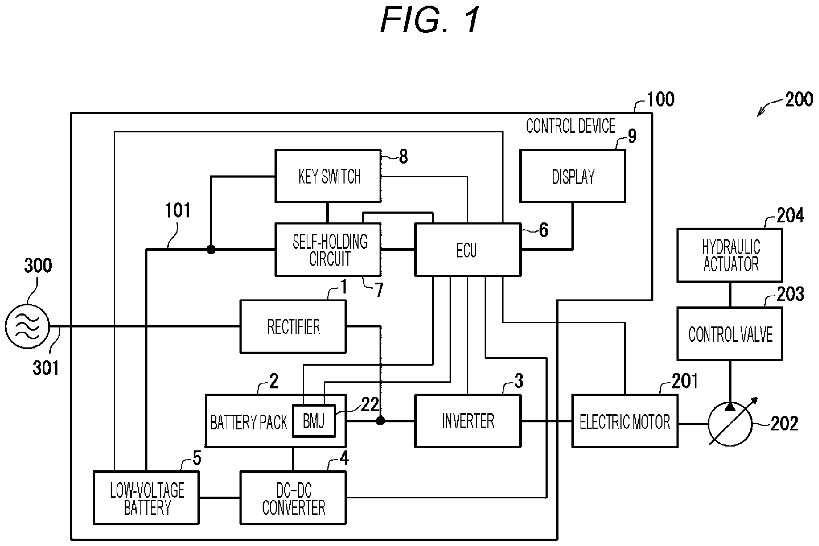

Hereinafter, a working machine 200 including a control device 100 according to one embodiment of the present invention will be described with reference to Fig. 1. The working machine 200 is, for example, a hydraulic excavator or a wheel loader.
Fig. 1 is a block diagram of the working machine 200 including the control device 100 according to the embodiment. As illustrated in Fig. 1, the working machine 200 includes the control device 100, an electric motor 201 which is a load, a hydraulic pump 202, a control valve 203, and a hydraulic actuator 204.

The electric motor 201 is, for example, a three-phase AC motor, and generates drive force when supplied with AC power from an inverter 3. The hydraulic pump 202 is operated by the drive force from the electric motor 201. As a result, hydraulic oil is supplied to the hydraulic actuator 204 via the control valve 203. The hydraulic actuator 204 is, for example, a boom cylinder, an arm cylinder, a work tool cylinder, a swing hydraulic cylinder, or a turning hydraulic cylinder.

The control device 100 is electrically connected to the electric motor 201, and controls power supply to the electric motor 201. The control device 100 includes a rectifier 1, a battery pack 2, the inverter 3, a DC-DC converter (hereinafter, abbreviated as a "converter") 4, a low-voltage battery 5, an electronic control unit (ECU) 6, a self-holding circuit 7, a key switch 8, and a display 9.

The battery pack 2 is one example of a power storage unit. The ECU 6 is one example of a control unit. The display 9 is one example of a display unit.

The rectifier 1 can receive AC voltage (AC power) supplied from an external power supply 300 via a power supply path 301. The external power supply 300 is, for example, a commercial power supply or a power supply device. The power supply path 301 is, for example, a power cable. The rectifier 1 is further electrically connected to the battery pack 2 and the inverter 3. When the operation mode of the working machine 200 is a first mode, the rectifier 1 converts AC voltage into DC voltage, and supplies the converted DC voltage to the battery pack 2. When the operation mode is a second mode, the rectifier 1 further converts AC voltage into DC voltage, and supplies the converted DC voltage to the inverter 3. When the operation mode is a third mode, the rectifier 1 further blocks the power supply path from the rectifier 1 to the battery pack 2 and the inverter 3. As a result, DC voltage is supplied to the inverter 3 by the battery pack 2. The first mode, the second mode, and the third mode are selectively switchable by a mode switch (not illustrated) provided in the working machine 200.

The battery pack 2 is a chargeable/dischargeable secondary battery. The battery pack 2 is typically a lithium ion battery. In the first mode, the battery pack 2 is charged by being supplied with DC voltage from the rectifier 1. In the third mode, the battery pack 2 supplies DC voltage to the inverter 3 by discharging.

The inverter 3 converts DC voltage supplied from the rectifier 1 or the battery pack 2 into AC voltage, and supplies the converted AC voltage to the electric motor 201. In other words, the battery pack 2 supplies AC voltage to the electric motor 201 as the load via the inverter 3.

The converter 4 steps down DC voltage supplied from the battery pack 2, and converts the DC voltage into DC voltage suitable for charging the low-voltage battery 5. The converter 4 supplies the converted DC voltage to the low-voltage battery 5. That is, the converter 4 can supply power from the battery pack 2 to the low-voltage battery 5.

The low-voltage battery 5 is a chargeable/dischargeable secondary battery. The low-voltage battery 5 is not limited to a lithium ion battery, and may be a lead battery. The low-voltage battery 5 is charged by being supplied with DC voltage from the converter 4. When electrically connected to the ECU 6 via a power supply path 101, the low-voltage battery 5 supplies DC voltage to the ECU 6.

The ECU 6 is operated by DC voltage from the low-voltage battery 5. That is, the ECU 6 receives power supply from the low-voltage battery 5. The ECU 6 has various ICs mounted on a circuit board. These various ICs include, for example, a power supply circuit and a microcomputer. The microcomputer includes a memory. Note that the memory may be mounted, as an IC different from the microcomputer, on the circuit board. The memory stores a control program and various types of data. When starting operation, the microcomputer starts executing the control program to control each component of the working machine 200.

The self-holding circuit 7 is a circuit that holds operation of a relay provided on the power supply path 101. When receiving a start signal from the key switch 8, the self-holding circuit 7 turns on the relay. As a result, the ECU 6 and the low-voltage battery 5 are electrically connected to each other via the power supply path 101. That is, power supply from the low-voltage battery 5 to the ECU 6 is started. When receiving a cancellation signal from the ECU 6, the self-holding circuit 7 turns off the relay. As a result, the power supply path 101 is blocked.

The key switch 8 is arranged near a steering wheel (not illustrated) of the working machine 200. The key switch 8 is a switch that switches between start (i.e., ON) and stop (i.e., OFF) of the working machine 200 according to operation by an operator. That is, the key switch 8 switches between the start and stop of the electric motor 201 as the load. When switched to the start, the key switch 8 transmits a start signal to the self-holding circuit 7. When the key switch 8 is switched to the start, an engine (not illustrated) of the working machine 200 is started. On the other hand, the key switch 8 is switched to the stop to transmit a stop signal to the ECU 6. When the key switch 8 is switched to the stop, the engine is stopped.

The display 9 is arranged near a driver's seat (not illustrated) of the working machine 200. The display 9 displays, on a screen, images indicated by various types of image data transmitted from the ECU 6. Particularly, the display 9 displays, on the screen, an image related to balance processing during execution of the balance processing (described later).

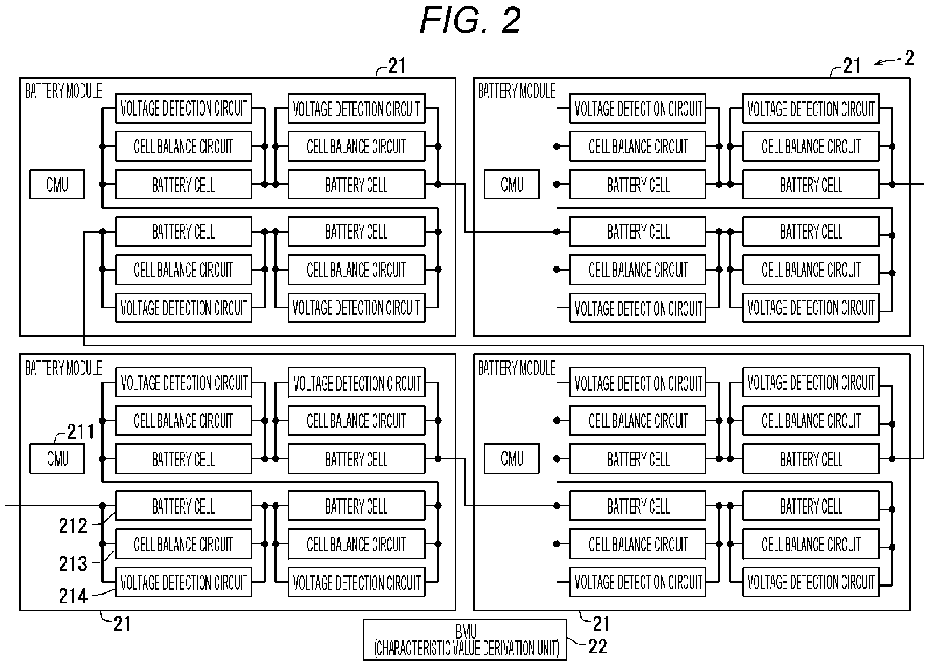

Next, details of the battery pack 2 will be described with reference to Fig. 2. Fig. 2 is a block diagram illustrating a configuration example of the battery pack 2 illustrated in Fig. 1. As illustrated in Fig. 2, the battery pack 2 includes four battery modules 21 and a battery management unit (BMU) 22. Note that the battery module 21 is also called an assembled battery. The number of battery modules 21 may be one or more.

Each battery module 21 includes a cell management unit (CMU) 211, four battery cells 212, four cell balance circuits 213, and four voltage detection circuits 214. That is, the battery pack 2 includes a plurality of battery cells 212. Note that in Fig. 2, for the sake of convenience, reference signs "211," "212," "213," and "214" are assigned to one CMU, one battery cell, one cell balance circuit, and one voltage detection circuit.

The CMU 211 monitors and controls the states of the four battery cells 212 included in the same battery module 21.

Each battery cell 212 is chargeable/dischargeable. A total of 16 battery cells 212 are provided in the battery pack 2. The 16 battery cells 212 are connected in series. One cell balance circuit 213 and one voltage detection circuit 214 are connected in parallel with each of the 16 battery cells 212.

Each cell balance circuit 213 has a discharge resistor and a switching element. The switching element is turned on and off under the control of the CMU (hereinafter referred to as a "corresponding CMU") 211 included in the same battery module 21.
While the switching element is ON, the battery cell 212 connected in parallel with the discharge resistor discharges. As a result, variation in a cell voltage in the battery pack 2 is reduced.

Under the control of the corresponding CMU 211, each voltage detection circuit 214 detects the voltage (hereinafter referred to as a "cell voltage") of the battery cell 212 connected in parallel with the voltage detection circuit 214 itself, and outputs the detected cell voltage to the corresponding CMU 211.

### Configuration and Effects of Claim 8

The BMU 22 controls the states of the four battery modules 21 included in the battery pack 2. The BMU 22 acquires, from each CMU 211, the cell voltage from each voltage detection circuit 214. The BMU 22 derives a characteristic value indicating the degree of variation in each acquired cell voltage. The BMU 22 outputs the derived characteristic values to the ECU 6. Specifically, the characteristic value is a difference between the maximum value and minimum value of all the cell voltages. Thus, the characteristic value is derived by simple calculation.

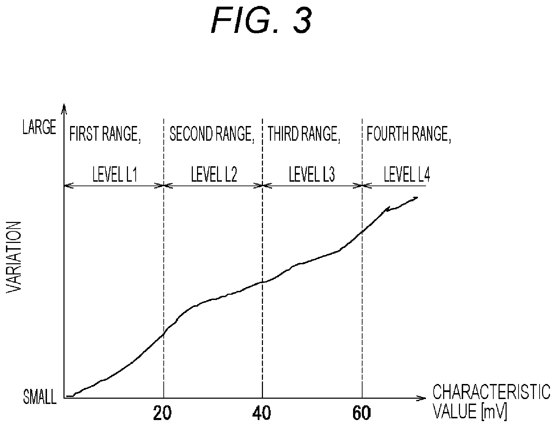

Fig. 3 is a graph illustrating a relationship between the characteristic value and the variation. As illustrated in Fig. 3, there is a positive correlation between the characteristic value and the variation. Moreover, the characteristic value has a value of 0 [mV] or more. In the embodiment, levels L1, L2, L3, and L4 are described in advance in the control program as one example of a plurality of levels in order to show the degree of variation. In a case where the characteristic value is in a first range, the variation is set in advance as the lowest level L1 of the plurality of levels. The first range is, for example, 0 [mV] or more and less than V1 (e.g., 20 [mV]). Similarly, in a case where the characteristic value is in a second range, a third range, and a fourth range, the variation is set in advance as the level L2, the level L3, and the level L4, respectively. Note that specific numerical ranges of the second to fourth ranges are as shown in Fig. 3.

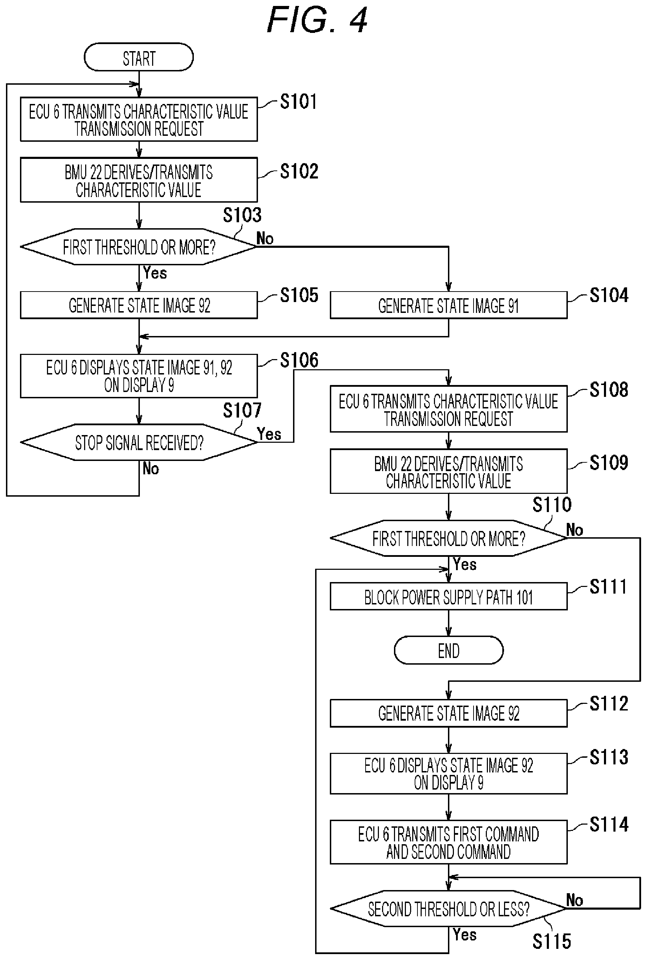

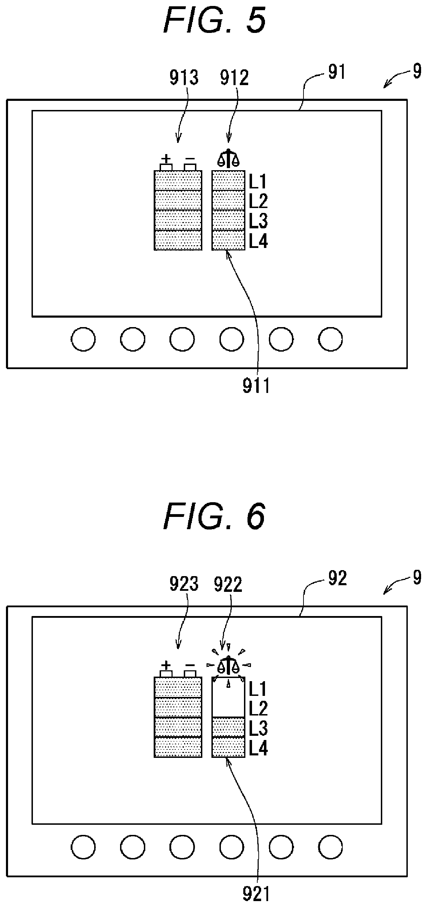

Next, the processing of the ECU 6 will be described in detail with reference to Figs. 1 to 6. Fig. 4 is a flowchart illustrating the processing of the control device 100 illustrated in Fig. 1. Fig. 5 is a view illustrating a state image 91 generated in Step S104 illustrated in Fig. 4. Fig. 6 is a view illustrating a state image 92 generated in Step S105 illustrated in Fig. 4.

As illustrated in Fig. 4, until the key switch 8 is switched to the stop after having been switched to the start, the control device 100 periodically repeatedly executes Steps S101 to S107 in addition to the control of the working machine 200.

In Step S101, the ECU 6 transmits a characteristic value transmission request to the BMU 22.

In Step S102, the BMU 22 acquires the cell voltage from each voltage detection circuit 214 upon reception of the transmission request. The BMU 22 derives the characteristic values based on the acquired cell voltages. The BMU 22 transmits the derived characteristic values to the ECU 6.

In Step S103, the ECU 6 determines whether or not the degree of variation indicated by each received characteristic value is a first threshold or more. The first threshold is a reference value indicating whether variation in the cell voltage is large or small. In a case where the variation is not the first threshold or more (No in Step S103), the ECU 6 executes Step S104. On the other hand, in a case where the variation is the first threshold or more (Yes in Step S103), the ECU 6 executes Step S105.

In any of Steps S104 and S105, the ECU 6 generates state image data indicating the state image (see Figs. 4 and 5) for display on the display 9. The state image indicates the state of the variation according to the degree of variation. Thus, when viewing the state image displayed on the display 9, the operator can recognize that due to large variation, the balance processing is executed after the key switch 8 has been switched to the stop. As a result, the operator is not confused even if the balance processing is started after the working machine 200 has been stopped by operation of the key switch 8.

Specifically, in Step S104, the ECU 6 generates the state image data indicating the state image 91 illustrated in Fig. 5. The state image 91 indicates the state of the variation in a first form. Specifically, the state image 91 includes a level image 911 and a first mark 912. The level image 911 is a mark indicating any of the plurality of levels (i.e., levels L1 to L4). In the embodiment, the level image 911 has, for example, a rectangular shape whose height differs depending on the levels L1 to L4.
Specifically, in the case of the level L1, the level image 911 is the highest. Subsequently, the level image 911 decreases in height in the order of the levels L2, L3, and L4. Thus, the level image 911 indicates, as the state of the variation, any of the plurality of levels. As a result, the operator of the working machine 200 can intuitively recognize the state of the variation only by slightly viewing the state image 91. Note that Fig. 5 illustrates, as an example, the level image 911 of the level L1.

The first mark 912 is arranged adjacent to the level image 911 by the ECU 6. The first mark 912 means that the level image 911 indicates the state of the variation. Thus, when the operator views the state image 91, the operator can intuitively recognize that the level image 911 indicates the state of the variation. Note that in the embodiment, the first mark 912 is, for example, a balance and is one example of a mark.

The state image 91 may further include a second mark 913. The second mark 913 is a mark indicating any of the plurality of levels of the remaining charge amount of the battery pack 2. That is, the state image 91 further indicates the remaining charge amount of the battery pack 2. This provides the operator with more information on the battery pack 2.

In Step S105, the ECU 6 generates the state image data indicating the state image 92 illustrated in Fig. 6. The state image 92 indicates the state of the variation in a second form different from the first form. Specifically, the state image 92 includes a level image 921 and a first mark 922. The level image 921 is similar to the level image 911. Note that Fig. 6 illustrates, as an example, the level image 921 of the level L3.

The first mark 922 is laid out adjacent to the level image 921 by the ECU 6. Similarly to the first mark 912, the first mark 922 indicates that the level image 921 indicates the state of the variation, and has a different form as compared to the first mark 912. Thus, when the operator views the state image 92, the operator can intuitively recognize that the state of the variation is not relatively favorable. In the embodiment, the first mark 922 has a form in which the first mark 912 is emphasized.

The state image 92 may further include a second mark 923 similar to the second mark 913.

In Step S106 after Steps S104 and S105, the ECU 6 transmits, for display, the state images 91, 92 (specifically the state image data) generated in Steps S104, S105. In Step S106, the display 9 further displays, on the screen, the state images 91, 92 based on the state image data received from the ECU 6. Thus, when the operator views the state images 91, 92, the operator can intuitively recognize the state of the variation of the battery pack 2 in the control device 100.

In Step S107, the ECU 6 determines whether or not the stop signal has been received from the key switch 8. When determining that the stop signal has not been received (No in Step S107), the ECU 6 executes Step S101. On the other hand, when determining that the stop signal has been received (Yes in Step S107), the ECU 6 executes Step S108.

Steps S108 to S110 are processing similar to that in Steps S101 to S103. In a case where the variation is not the first threshold or more (No in Step S110), the ECU 6 executes Step S 111. On the other hand, in a case where it is determined that the variation is the first threshold or more (Yes in Step S110), the ECU 6 sequentially executes Steps S112, S113.

In Step S111, since the ECU 6 does not need to execute the balance processing, the ECU 6 transmits the cancellation signal to the self-holding circuit 7. Upon reception of the cancellation signal, the self-holding circuit 7 blocks the power supply path 101 by turning off the relay. As a result, the working machine 200 stops. That is, the processing of Fig. 4 ends.

Steps S112 and S113 are processing similar to that in Steps S105 and S106. Thus, the state image 92 is displayed on the screen of the display 9. As a result, the operator can recognize that the balance processing in Step S114 is to be executed. As a result, the operator is not confused even if the balance processing is started after the working machine 200 has been stopped by operation of the key switch 8.

In Step S114, the ECU 6 transmits a first command to the converter 4, and transmits a second command to the BMU 22. The first command is a command for instructing power supply from the battery pack 2 to the low-voltage battery 5. The second command is a command for instructing execution of the balance processing.

Upon reception of the first command, the converter 4 supplies DC voltage from the battery pack 2 to the low-voltage battery 5 to charge the low-voltage battery 5. Thus, DC voltage from the low-voltage battery 5 is continuously supplied to the ECU 6. As a result, the following balance processing is stably executed.

Upon reception of the second command, the BMU 22 instructs each CMU 211 to execute the balance processing. Each CMU 211 specifies at least one target battery cell 212 of the four battery cells 212 included in the same battery module 21. The target battery cell 212 includes at least a battery cell 212 having the maximum cell voltage. Each CMU 211 turns on the switching element of the cell balance circuit (hereinafter referred to as a "corresponding cell balance circuit") 213 connected in parallel with the target battery cell 212. As a result, the target battery cell 212 discharges. As a result, variation in the cell voltage is reduced. Note that each CMU 211 appropriately turns off the switching element of the corresponding cell balance circuit 213. For a condition or timing for turning off each switching element, a well-known technique can be applied. Note that the BMU 22 and each CMU 211 are one example of a balance processing unit.

The ECU 6 periodically executes Step S115 in the middle of the balance processing. In Step S115, the ECU 6 receives the characteristic values from the BMU 22, as in Steps S101 and S102. The ECU 6 further determines whether or not each received characteristic value is a second threshold or less. The second threshold is smaller than the first threshold, and is set in advance. In a case where it is determined that the characteristic value is not the second threshold or less (No in Step S115), the ECU 6 executes Step S115. On the other hand, in a case where it is determined that the characteristic value is the second threshold or less (Yes in Step S115), the ECU 6 executes Step S111.

### [Second Modification]

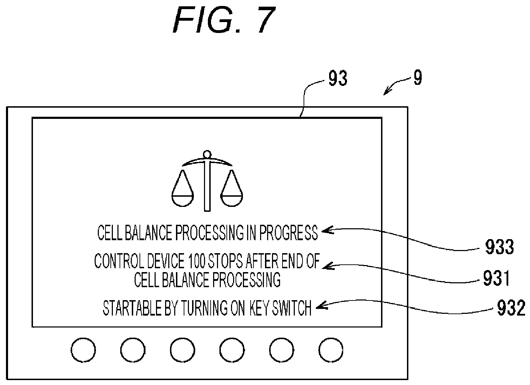

Next, a second modification of the processing of the ECU 6 will be described in detail with reference to Figs. 1 and 7. Fig. 7 is a view illustrating a display screen example of the display 9 illustrated in Fig. 1.

The ECU 6 generates, for display, image data indicating a notification image 93 as illustrated in Fig. 7 during execution of the balance processing (Step S114). The notification image 93 is displayed on the display 9. The notification image 93 includes: at least one of a first character string 931 or a second character string 932; and a third character string 933. The first character string 931 is a character string indicating that the control device 100 stops after the end of the balance processing. The second character string 932 is a character string indicating that the working machine 200 can be switched to the start by the key switch 8 during execution of the balance processing. The third character string 933 is a character string indicating that the balance processing is being executed. The display 9 displays the notification image 93 based on the image data generated by the ECU 6.

According to the second modification, the operator of the working machine 200 can easily understand the current state of the working machine 200 by viewing, on the notification image 93: at least one of the first character string 931 or the second character string 932; and the third character string 933.

The embodiments of the present disclosure have been described above with reference to the drawings. Note that the present disclosure is not limited to the above-described embodiments and can be implemented in various aspects without departing from the gist of the present disclosure. In addition, the plurality of components disclosed in the above-described embodiments can be appropriately modified. For example, one component of all components described in one embodiment may be added to a component of another embodiment, or some components of all components described in one embodiment may be omitted from the embodiment.

The drawings schematically illustrate each component mainly for the sake of easy understanding of the present disclosure, and the thickness, length, number, interval, or the like of each illustrated component may be different from actual ones for the sake of convenience in drawing creation. In addition, the configuration of each component described in the above-described embodiment is one example and is not particularly limited, and needless to say, various changes can be made without substantially departing from the effects of the present disclosure.
(1) In the embodiments, since the electric motor 201 is the three-phase AC motor, the battery pack 2 supplies AC power to the electric motor 201 as the load via the inverter 3. However, the present invention is not limited thereto, and in a case where the electric motor 201 is a DC motor, the battery pack 2 can supply DC voltage to the electric motor 201 via a DC-DC converter or directly.
(2) In the embodiments, the characteristic value is the difference between the maximum value and minimum value of all the cell voltages. However, the present invention is not limited thereto, and the characteristic value may be the variance or standard deviation of all the cell voltages. In addition, the minimum value (i.e., four cell voltages in the embodiments) of the cell voltage is selected for each battery module 21. A difference between the maximum value and minimum value of the selected cell voltage may be derived as the characteristic value.
(3) In the embodiments, the control device 100 controls the electric motor 201 of the working machine 200. However, the present invention is not limited thereto, and the control device 100 may control, for example, a motor of an electric vehicle. In addition, the control device 100 can be applied to an electric device or an electronic device including the battery pack 2.
(4) In the embodiments, the control device 100 is applied to the working machine 200 operated by the operator. However, the present invention is not limited thereto, and the control device 100 may be applied to a working machine 200 which can be remotely operated. In this case, the control device 100 includes a remote controller that switches between the start and the stop instead of the key switch 8. In addition, the control device 100 may be applied to a working machine 200 which can be automatically driven. In this case, in the control device 100, the ECU 6 switches the start and stop of the working machine 200 instead of the key switch 8.
(5) In the embodiments, the control device 100 includes the display 9. However, the present invention is not limited thereto, and in a case where the working machine 200 can be remotely operated by the remote controller or be monitored by a cloud computer, the control device 100 does not necessarily include the display 9. Specifically, the control device 100 may transmit the state image data to the remote controller or the cloud computer via a wireless communication interface.

The present application discloses the following supplements. The following supplements does not limit the present invention.

### (Supplement 1)

A control device including:
a power storage unit that includes a plurality of battery cells and supplies power to a load,
a balance processing unit that is capable of executing, in a case where the load stops, balance processing of reducing variation in the voltage of each of the plurality of battery cells according to the degree of the variation in the voltage, and
a control unit that generates, for display, a state image indicating the state of the variation according to the degree of variation.

### (Supplement 2)

The control device according to Supplement 1, in which
the state of the variation is indicated by any of a plurality of levels set in advance.

### (Supplement 3)

The control device according to Supplement 2, in which
the state image includes
a level image indicating any of the plurality of levels, and
a mark arranged adjacent to the level image and indicating that the level image indicates the state of the variation.

### (Supplement 4)

The control device according to any one of Supplements 1 to 3, in which
the control unit
generates the state image indicating the state of the variation in a first form in a case where the degree of variation is a threshold or less, and
generates the state image indicating the state of the variation in a second form different from the first form in a case where the degree of variation exceeds the threshold.

### (Supplement 5)

The control device according to any one of Supplements 1 to 4, in which
the state image further indicates the remaining charge amount of the power storage unit.

### (Supplement 6)

The control device according to any one of Supplements 1 to 5, in which
the control unit generates, for display, the state image during execution of the balance processing.

### (Supplement 7)

The control device according to any one of Supplements 1 to 6, further including:
a switching unit that switches between the start and stop of the load,
in which the control unit generates, for display, a notification image including: at least one of a first character string or a second character string; and a third character string,
the first character string indicates that the control device stops after the end of the balance processing,
the second character string indicates that it is possible to switch to the start by the switching unit during execution of the balance processing, and
the third character string indicates that the balance processing is being executed.

### (Supplement 8)

The control device according to any one of Supplements 1 to 7, in which
the degree of variation is a difference between the maximum value and minimum value of the voltage of each of the plurality of battery cells.

### (Supplement 9)

The control device according to any one of Supplements 1 to 8, further including:
a display unit that displays the state image.

### INDUSTRIAL APPLICABILITY

The present invention relates to the control device, and has industrial applicability.

### LIST OF REFERENCE SIGNS

- 100: Control Device
- 1: Rectifier
- 2: Battery Pack
- 21: Battery Module
- 211: CMU
- 212: Battery Cell
- 213: Cell Balance Circuit
- 214: Voltage Detection Circuit
- 22: BMU
- 3: Inverter
- 4: Converter
- 5: Low-Voltage Battery
- 6: ECU
- 7: Self-Holding Circuit
- 8: Key Switch
- 9: Display
- 101: Power Supply Path
- 200: Working Machine

## Claims

1. A control device comprising:
a power storage unit that includes a plurality of battery cells and supplies power to a load;
a balance processing unit that is capable of executing, in a case where the load stops, balance processing of reducing variation in a voltage of each of the plurality of battery cells according to a degree of the variation in the voltage; and
a control unit that generates, for display, a state image indicating a state of the variation according to the degree of the variation.

2. The control device according to claim 1, wherein
the state of the variation is indicated by any of a plurality of levels set in advance.

3. The control device according to claim 2, wherein
the state image includes
a level image indicating any of the plurality of levels, and
a mark arranged adjacent to the level image and indicating that the level image indicates the state of the variation.

4. The control device according to claim 1 or 2, wherein
the control unit
generates the state image indicating the state of the variation in a first form in a case where the degree of the variation is a threshold or less, and
generates the state image indicating the state of the variation in a second form different from the first form in a case where the degree of the variation exceeds the threshold.

5. The control device according to any one of claims 1 to 3, wherein
the state image further indicates a remaining charge amount of the power storage unit.

6. The control device according to any one of claims 1 to 3, wherein
the control unit generates, for display, the state image during execution of the balance processing.

7. The control device according to any one of claims 1 to 3, further comprising:
a switching unit that switches between start and stop of the load,
wherein the control unit generates, for display, a notification image including:
at least one of a first character string or a second character string; and a third character string,
the first character string indicates that the control device stops after an end of the balance processing,
the second character string indicates that it is possible to switch to the start by the switching unit during execution of the balance processing, and
the third character string indicates that the balance processing is being executed.

8. The control device according to any one of claims 1 to 3, wherein
the degree of the variation is a difference between a maximum value and a minimum value of the voltage of each of the plurality of battery cells.

9. The control device according to any one of claims 1 to 3, further comprising:
a display unit that displays the state image.
